# EUROPEAN PATENT APPLICATION

(11) **EP 4 581 988 A1**
(43) Date of publication of application: **09.07.2025**
(21) Application number: 24150404.2
(22) Date of filing: 04.01.2024
(51) Int. Cl.: A47J 31/52, A47J 31/00

(54) **BEVERAGE CONTAINER**

(71) Applicant: B/E Aerospace, Inc., Winston-Salem, NC 27105 (US)
(72) Inventor: PANJER, Erik Adrian Stephan, Maarsbergen (NL)
(74) Representative: Dehns

(57) **Abstract**

There is provided a beverage container for an aircraft galley. The beverage container receivable within a beverage maker of the aircraft galley to receive a beverage therefrom. The beverage container comprising a cavity for receiving and storing the beverage, a sensor positioned within the cavity, the sensor configured to measure a property of the beverage within the cavity, and a container communication module coupled to the controller, the container communication module configured to transmit data relating to the property to the beverage maker.

## Description

### Field of Invention

The present application relates to a beverage container, a galley insert, a beverage maker and a method.

### Background

Traditionally, making and serving beverages on flights can be a time-consuming activity for flight attendants. This is because there are various actions to brew a beverage and to serve the beverage to passengers during flights.

### Summary

In an aspect, there is provided a beverage container for an aircraft galley. The beverage container is receivable within a beverage maker of the aircraft galley to receive a beverage therefrom. The beverage container comprises a cavity for receiving and storing the beneverage, a sensor positioned within the cavity, the sensor configured to measure a property of the beverage within the cavity, and a container communication module coupled to the controller, the container communication module configured to transmit data relating to the property to the beverage maker.

The sensor may comprise a temperature sensor configured to measure a temperature of the beverage within the cavity. The sensor may comprise a beverage level sensor configured to measure an amount of the beverage within the cavity.

The beverage container may further comprise a cover positioned over an opening of the cavity. The cover being movable between a first position and a second position. The cover in the first position exposes more of the opening than the cover in the second position. The beverage container may comprise an actuator. The actuator being configured to move the cover between the first position and the second position on receipt of a command. The cover may be configured to be in the first position when the beverage container and/or the cover is positioned distal from the beverage maker. The cover may be configured to be in the second position when the beverage container and/or the cover is positioned proximate to the beverage maker.

The beverage container may further comprise a display communicatively coupled to the sensor. The display is configured to display information indicative of the measured property of the fluid.

The beverage container may further comprise a controller communicatively coupled to the sensor. The controller is configured to generate an instruction for making a new beverage based on the property. The data may comprise the instruction relating to the property to the beverage maker. The controller may comprise a button configured to be actuatable by a user to generate the instruction. The controller may comprise a processor configured to generate the instruction based on a comparison between the measured property and a threshold value.

The container communication module may comprise a wireless transmitter configured to wirelessly transmits the generated instruction. The container communication module may comprise a communication terminal configured to transmit the generated instruction through physical contact.

In yet another aspect, there is provided a beverage maker for an aircraft galley. The beverage maker is configured to receive a beverage container therein and to dispense a beverage to the beverage container. The beverage maker comprises a beverage preparation device configured to make the beverage, a maker communication module configured to receive data relating to the property to the beverage maker, and a controller communicatively coupled to both the beverage preparation device and the maker communication module, the controller configured to the selectively activate the beverage preparation device based on the received data.

The beverage preparation device may comprise a heating element and activating the beverage preparation device comprises activating the heating element. The beverage preparation device may comprise a grinder and activating the beverage preparation device comprises activating the grinder.

The beverage maker may further comprise a power terminal configured to wirelessly/via physical contact transfer energy to the beverage container.

In yet another aspect, there is provided a method for serving a beverage. The method comprises measuring, by one or more sensors of a beverage container, at least one property of a beverage within the beverage container, generating, by a controller, an instruction for making a new beverage based on a comparison between the measured property and a predetermined threshold value, and making, by a beverage preparation device of a beverage maker, the new beverage when the beverage preparation device receives the generated instruction.

In yet another aspect, there is provided a beverage container configured to be receivable within a beverage maker to receive a beverage therefrom. The beverage container comprises a cavity for receiving and storing the fluid, an opening of the cavity, wherein the cavity is configured to receive the beverage through the opening, a cover positioned over the opening, the cover being movable between a first position and a second position. The cover in the first position exposes more of the opening than the cover in the second position. The cover is configured to be in the first position when the beverage container and/or cover is distal from the beverage maker and the cover is configured to be in the second position when the beverage container and/or cover is proximate to the beverage maker.

The cover may be configured to be in the first position when the beverage container is receiving energy from a power terminal of the beverage maker and the cover may be configured to be in the second position when the beverage container is not receiving energy from the power terminal.

The beverage container may further comprise a position sensor configured to measure the distance between the beverage container and the beverage maker.

In yet another aspect, there is provided a beverage provision system. The beverage provision system comprises a beverage container as described above and a beverage maker as described above.

### Summary of the Figures

- Fig. 1: shows a perspective view of a beverage container;
- Fig. 2: shows a perspective view of a cover of a beverage container;
- Fig. 3: shows a perspective view of a beverage container and a beverage maker; and
- Fig. 4: shows a flowchart depicting a method of making and serving beverages.

### Detailed Description

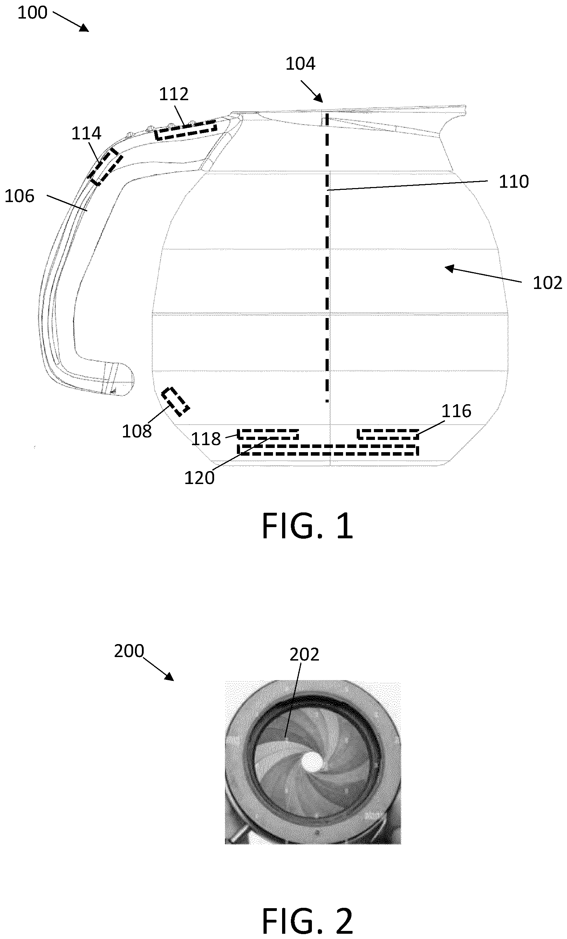

Fig. 1 shows a beverage container 100. The beverage container 100 can be received by a beverage maker described in more detail below. In some embodiments, the beverage maker may be formed as a part of an aircraft galley. In these embodiments, the beverage container 100 itself may be considered to be a Galley Insert (GAIN). A GAIN is a standard term of the art. A GAIN may be of a standardized size. The beverage container 100 and beverage maker may form a beverage provision system. In some embodiments, the beverage provision system may be a GAIN. The beverage container comprises a cavity 102, an aperture 104, a handle 106, one or more sensors 108, 110, a display 112, a controller 114, a container communication module 116, an energy storage device 118, and a power terminal 120.

The cavity 102 is configured to receive and store a beverage therein. The beverage may be a hot beverage dispensed from a beverage maker. The cavity 102 may be defined by a body of the beverage container 100. The aperture 104 is fluidly coupled to the cavity 102. The aperture 104 may be considered to be an opening of the cavity 102.

The one or more sensors 108, 110 are positioned within the cavity 102. Each of the one or more sensors 108, 110 is configured to measure a property of the beverage within the cavity 102. This can be done continuously so as to continuously monitor one or more properties of the beverage within the cavity 102. In this embodiment, the one or more sensors 108, 110 comprises a temperature sensor 108. The temperature sensor 108 is configured to measure the temperature of the beverage within the cavity. The temperature sensor 108 may be positioned distal to the aperture 104. Specifically, the temperature sensor 108 is positioned at the bottom of the cavity 102. The one or more sensors 108, 110 further comprises a fluid level sensor 110. The fluid level sensors 110 is configured to measure the amount of beverage within the cavity 102. The fluid level sensor 110 extends along a direction that extends from the aperture 104 to the bottom of the cavity 102. In this embodiment, the fluid level sensor 110 extends along the full extent of the cavity 102 in the direction. In other embodiments, the fluid level sensor 110 does not extend along the full extent of the cavity in the direction, e.g. the fluid level sensor only extends along a partial extent of the cavity along the direction. In some embodiments, the one or more sensors comprises a timer configured to measure the amount of time the beverage has been stored within the cavity. Advantageously, the use of the one or more sensors allows for the condition of the beverage to be monitored with reduced user interaction. In some embodiments, the one or more sensors are omitted entirely.

The display 112 is communicatively coupled to each of the one or more sensors 108, 110. The display 112 is configured to display information indicative of one or more of the measured properties. The display 112 is positioned on the handle 106. Advantageously, the display being in such a position makes it easier for viewing by the user. The controller 114 is configured to generate an instruction for commanding a corresponding beverage maker to make a new beverage. In this embodiment, the controller 114 is a button that is activatable by a user, where the instruction is generated responsive to the user pressing/activating the button. In this embodiment, the controller 114 is positioned on the handle 106. Advantageously, this allows for easier access to the controller when the user is holding the handle 106. Therefore, the provision of the controller allows for easier control of the beverage maker by the user. In some embodiments, the controller is omitted entirely from the beverage container. In some embodiments, the controller is comprised in the beverage maker (discussed in more detail below).

In other embodiments, the controller is a processor configured to automatically generate the instruction based on the measured properties. In these embodiments, the controller 114 is communicatively coupled to the each of the one or more sensors 108, 110. The processor may automatically generate the instruction base on a comparison between the measured property and a predetermined threshold value. In some embodiments, the processor may generate the instruction if the temperature falls below a predetermined threshold temperature, e.g. 50°C. In some embodiments, the processor may generate the instruction if the fluid level or the amount of beverage falls below a predetermined threshold level, e.g. 200 ml. In some examples, the processor may generate the instruction if the timer exceeds a predetermined threshold time, e.g. 30 minutes.

The container communication module 116 is communicatively coupled to each of the one or more sensors 108, 110. The container communication module 116 is communicatively coupled to the controller 114. The container communication module 116 is configured to transmit data relating to the property to the beverage maker, e.g. by transmitting the generated instruction to the beverage maker. In some embodiments, the container communication module 116 comprises an antenna configured to wirelessly transmits the generated instructions to the beverage maker. In some embodiments, the container communication module 116 transmits the generated instructions to the beverage maker via a physical connection with the beverage maker. Advantageously, this arrangement reduces the time and effort required in the making and serving of beverages by reducing the amount of actions required from the user, i.e. a flight attendant. Specifically, separate actions on the beverage maker are not required for the user commanding the beverage maker to make a new beverage.

The energy storage device 118 is configured to supply electrical power to one or more of the components of the beverage container 100. The energy storage device 118 is configured to store electrical power. In this embodiment, the energy storage device 118 provides electrical power to each of the one or more sensors 108, 110, the display 112, and the container communication module 116. In embodiments where the controller comprises a processor, the energy storage device may also supply electrical power to the processor. In this embodiment, the energy storage device 118 is a battery. In other embodiments, the energy storage device is not a battery, e.g. the energy storage device may be a capacitor.

The power terminal 120 is electrically connected to the energy storage device 118. The power terminal 120 is configured to be connected to a power source to supply electrical energy for storage in the energy storage device 118. In this embodiment, the power terminal 120 is a receiving coil configured to wirelessly receive energy form the energy source. In other embodiments, the power terminal is not a receiving coil, e.g. the power terminal is a connector that is configured to physically connect to terminals of a power source, e.g. a power terminal of the beverage maker.

Fig. 2 depicts a cover 200 that can be optionally added to the beverage container 100. The cover 200 is configured to cover the aperture 104 of the beverage container 100. The cover 200 is configured to be movable between a first position and a second position. The cover 200 in the first position exposes more of the aperture than the cover 200 in the second position. Advantageously, the cover in the first position allows for the beverage container to be safer to carry, as hot contents of the beverage container are less likely to spill out through the smaller opening. Advantageously, the cover in the second position allows for the beverage container to be filled more easily, reducing the time required for filing the beverage container through the large opening. In this embodiment, the cover 200 comprises an iris 202 that is rotatable between the first position and the second position. In this embodiment, the beverage container comprises an actuator (e.g. a motor) configured to move the cover between the first position and the second position on receipt of a command. In this embodiment, the cover 200 in the first position completely exposes the aperture 104. In other embodiments, the cover 200 in the first position does not completely expose the aperture 104, e.g. the cover 200 at least partially exposes the aperture 104. In this embodiment, the cover 200 in the second position completely closes the aperture 104. In other embodiments, the cover 200 in the second position does not completely close the aperture 104, e.g. the cover 200 partially closes the aperture 104. The cover 200 may be configured to receive electrical power from the energy storage device 118. The cover 200 is further configured to be in the first or second position based on a proximity to the beverage maker.

The cover 200 is configured move to the first position (if not already in the first position) based on the distance from the beverage container 100 (and/or the cover 200) to the beverage maker. In this embodiment, the cover 200 achieves this by utilising the connection between the power terminal 120 and the power source. Specifically, when the power terminal 120 does not receive power from the power source, the cover 200 is moved to the first position. In other embodiments, at least one of the cover 200 and beverage container 100 further comprises a proximity sensor configured to measure the distance between the cover 200 and/or beverage container 100 and the beverage maker. In these embodiments, the cover 200 is configured to move to the first position when the measured distance exceeds a predetermined threshold distance, e.g. 1m.

Similarly, the cover 200 is configured to move to the second position (if not already in the second position) based on the distance between the beverage container 100 and/or cover 200 and the beverage maker. In this embodiment, the cover 200 achieve this by utilising the connection between the power terminal 120 and the power source. Specifically, when the power terminal 120 received power from the power source, the cover 100 is moved into the second position. In other embodiments, at least one of the cover 200 and beverage container 100 further comprises a proximity sensor configured to measure the distance between the cover 200 and/or beverage container 100 and the beverage maker. In these embodiments, the cover 200 is configured to move to the second position when the measured distance falls below a predetermined threshold distance, e.g. 1m. In some embodiments, the proximity sensor is configured to measure the distance based on the time taken by a signal travelling from the beverage maker to the beverage container or *vice versa.* This may be achieved, for example, by including, in the signal, the send time which is time at which the signal is sent or is to be sent and determining the difference between the send time and a reception time, which is the time at which the signal is received. In these cases, the proximity sensor may be considered to comprise a clock within the beverage container and a clock within the beverage maker. The container communication module 116 may form part of the proximity sensor.

Advantageously, the cover tends to improve safety of the user and any nearby persons while improving the ease of use as less actions are required of the user.

In some embodiments, the beverage container further comprises a conduit fluidly coupling the cavity to the outside environment. The conduit may be in the form of a spout. In these embodiments, the conduit may be provided away from the cover and/or aperture. As such, the cover in either the first or second position may not obstruct the conduit. Advantageously, the cover does not need to be opened to pour out the beverage from the cavity. In some embodiments, the beverage container does not comprise the conduit and the cover needs to be opened to pour the beverage out from the cavity.

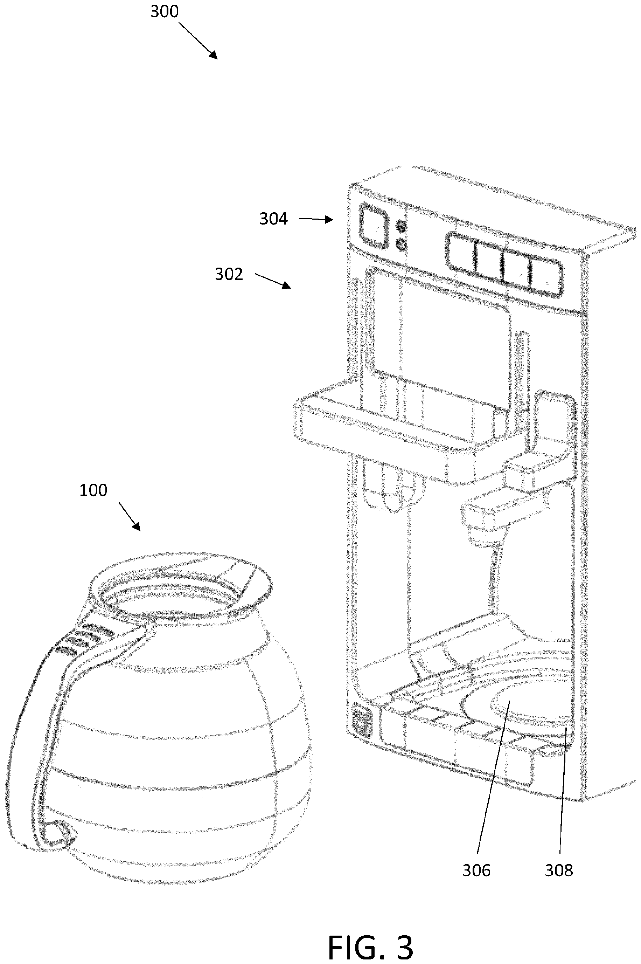

Fig. 3 shows a beverage provision system 300 comprising a beverage container 100 as described above and a beverage maker 302. In some embodiments, the beverage maker 302 may be provided individually and separate from the beverage container 100. In this embodiment, the beverage maker 302 is fixed to the galley of an aircraft. Advantageously, the beverage maker 304 is less likely to move around the aircraft, e.g. during flight, thereby improving safety since hot liquids and heavy equipment are less likely to fall onto nearby persons. The beverage maker 302 comprises a beverage preparation device 304 for making a beverage, a power source 306 and a maker communication module 308. The beverage preparation device 304 for making a beverage may be any component that is used in the making of a beverage. For example, the beverage preparation device 304 may be a coffee grinder, or a water heater, or an actuator that deposits a tea bag, or a pump for pumping hot or cold water.

The power source 306 is configured to connect to the power terminal 120 of the beverage container 100 and supply electrical power therethrough. In some embodiments, the power source 306 may be terminals that are connected to mains electrical socket. In some embodiments, the power source 306 comprises an induction coil configured to wirelessly supply power.

The beverage maker communication module 308 is configured to receive data relating to the property of the beverage within the cavity of the beverage container. The data may include the instruction for commanding the making of a new beverage. The maker communication module 308 is configured to send the received instruction to the beverage preparation device 304 thereby commencing the making of a new beverage. In some embodiments, the maker communication module 308 may comprise a receiver configured to wirelessly receive the instruction. In some embodiments, the maker communication module 308 comprises a connector configured to physically connect to the container communication module 116 of the beverage container 100 to enable the transmission of data therethrough.

In some embodiments, the beverage maker comprises the controller instead of the beverage container. In these embodiments, the data relating to the property of the beverage is data indicative of one or more of the measured properties of the beverage within the cavity. The controller of the beverage maker is configured to generate the instruction for commanding the making of a new beverage based on the received data, i.e. based on the measured properties received from the beverage container. This generation of the instruction may involve one or more of the same processes as discussed above in relation to Fig. 1.

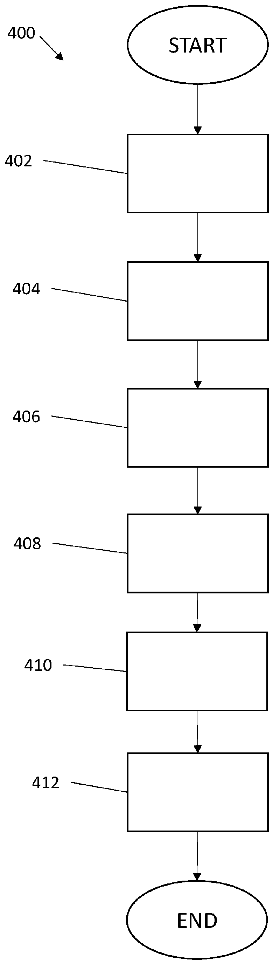

FIG. 4 depicts a flowchart of a method 400 for making a beverage. At step 402, the beverage maker, makes and/or brews a first beverage. The making and/or brewing the first beverage may involve one or more of: grinding coffee beans, boiling water, pumping water, and depositing a tea bag.

At step 404, the beverage maker dispenses the first beverage into a cavity of a beverage container. The beverage container may be received within the beverage maker during the dispensing process.

At step 406, a user serves the first beverage from the beverage container. This step may involve removing the beverage container from the beverage maker. The beverage container having the first beverage stored therein.

At step 408, one or more sensors in the beverage container measure and/or monitor at least one property of the first beverage. This may involve measuring the temperature of the first beverage by using a temperature sensor. Additionally or alternatively, this may involve measuring the amount of the first beverage left inside the beverage container. Additionally or alternatively, this may involve measuring the time that the first beverage has been stored within the beverage container.

At step 410, data relating to the property of the beverage is transmitted by a container communication module of the beverage container to a maker communication module comprised in the beverage maker.

In some embodiments, the data may comprise an instruction to make and/or brew a second beverage. The instruction may be generated by a controller comprised in the beverage container. The controller may comprise a processor configured to generate the instruction based on a comparison of the at least one measured property with a predetermined threshold value. For example, the processor may generate the instructions when the temperature falls below 50°C and/or the beverage level falls below 200ml, and/or the first beverage has been stored for more than 30 minutes.

In some embodiments, the beverage maker comprises the controller. In these embodiments, the data relating to the property of the beverage is data indicative of one or more of the measured properties of the beverage within the cavity. The controller may comprise a processor configured to generate the instruction based on a comparison of the at least one measured property with a predetermined threshold value. For example, the processor may generate the instructions when the temperature falls below 50°C and/or the beverage level falls below 200ml, and/or the first beverage has been stored for more than 30 minutes.

At step 410, responsive to the beverage preparation device receiving the generated instructions, the beverage preparation device makes a second beverage. Step 410 may be done without the beverage container being returned to the beverage maker. In other words, the making of the second beverage or new beverage is performed without the beverage container being received in the beverage maker.

At step 412, the beverage container is returned to the beverage maker and the already made second beverage is dispensed from the beverage maker into the beverage container.

The order in which the various steps are described above is merely illustrative. The above-described steps may be performed in any order or concurrently with any of the other steps. Furthermore, one or more of the steps described above may be omitted entirely.

Various aspects of the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A beverage container for an aircraft galley, the beverage container receivable within a beverage maker of the aircraft galley to receive a beverage therefrom, the beverage container comprising:
a cavity for receiving and storing the beverage;
a sensor positioned within the cavity, the sensor configured to measure a property of the beverage within the cavity; and
a container communication module coupled to the controller, the container communication module configured to transmit data relating to the property to the beverage maker.

2. The beverage container of claim 1, wherein the sensor comprises a temperature sensor configured to measure a temperature of the beverage within the cavity.

3. The beverage container of claim 1 or claim 2, wherein the sensor comprises a fluid level sensor configured to measure an amount of the beverage within the cavity.

4. The beverage container of any of claims 1 to 3, further comprising a cover positioned over an opening of the cavity, the cover being movable between a first position and a second position; wherein the cover in the first position exposes more of the opening than the cover in the second position, the beverage container comprising an actuator, the actuator configured to move the cover between the first position and the second position on receipt of a command.

5. The beverage container of any preceding claim, further comprising a display communicatively coupled to the sensor, the display configured to display information indicative of the measured property of the fluid.

6. The beverage container of any preceding claim, further comprising a controller communicatively coupled to the sensor, the controller configured to generate an instruction for making a new beverage based on the property.

7. The beverage container of claim 6, wherein the data comprises the instruction relating to the property to the beverage maker.

8. The beverage container of claim 6 or 7, wherein the controller comprises:
a button configured to be actuatable by a user to generate the instruction; or
a processor configured to generate the instruction based on a comparison between the measured property and a threshold value.

9. The beverage container of any of claims 6 to 8, wherein the container communication module comprises a wireless transmitter configured to wirelessly transmit the instruction.

10. The beverage container of any of claims 1 to 8, wherein the container communication module comprises a communication terminal configured to transmit the generated instruction through physical contact.

11. A beverage maker for an aircraft galley, the beverage maker configured to receive a beverage container therein and to dispense a beverage to the beverage container, the beverage maker comprising:
a beverage preparation device configured to make the beverage;
a maker communication module configured to receive data relating to the property to the beverage maker; and
a controller communicatively coupled to both the beverage preparation device and the maker communication module, the controller configured to selectively activate the beverage preparation device based on the received data.

12. The beverage maker of claim 11, wherein:
the beverage preparation device comprises a heating element and activating the beverage preparation device comprises activating the heating element; and/or
the beverage preparation device comprises a grinder and activating the beverage preparation device comprises activating the grinder.

13. The beverage maker of claim 11 or claim 12, further comprising a power terminal configured to wirelessly/via physical contact transfer energy to the beverage container.

14. A beverage provision system comprising:
the beverage container of any of claims 1 to 10; and
the beverage maker of any of claims 11 to 13.

15. A method for serving a beverage, the method comprising:
measuring, by one or more sensors of a beverage container, at least one property of a beverage within the beverage container;
generating, by a controller, an instruction for making a new beverage based on a comparison between the measured property and a predetermined threshold value; and
making, by a beverage preparation device of a beverage maker, the new beverage when the beverage preparation device receives the generated instruction.
